(19) **Europäisches Patentamt**

**European Patent Office**

**Office européen des brevets**

(11) Veröffentlichungsnummer: **0 277 263**
**B1**

(12) **EUROPÄISCHE PATENTSCHRIFT**

(45) Veröffentlichungstag der Patentschrift:
12.09.90

(51) Int. Cl.⁵: **B01D 3/00**, B01D 3/28, B01J 8/24

(21) Anmeldenummer: 87105075.3

(22) Anmeldetag: 06.04.87

(54) Verfahren zum Trennen von Feststoffteilchen enthaltenden Flüssigkeiten durch Destillation.

(43) Veröffentlichungstag der Anmeldung:
10.08.88 Patentblatt 88/32

(45) Bekanntmachung des Hinweises auf die Patenterteilung:
12.09.90 Patentblatt 90/37

(84) Benannte Vertragsstaaten:
AT BE CH DE ES FR GB GR IT LI LU NL SE

(56) Entgegenhaltungen:
DE-B- 2 020 144

CHEMICAL ABSTRACTS, Band 77, Nr. 24, 11. Dezember 1972, Seite 155, Spalte 1, Zusammenfassungsnr. 154647t, Columbus, Ohio, US; N.I. GEL'PERIN et al.: "Testing an industrial column containing fluidized beds of spherical packing during the fractional distillation of an isobutane-isobutylene fraction" enols "trength fibre, e.g. glass fibre" CHEM. 1977, 000
CHEMICAL ABSTRACTS, Band 74, Nr. 22, 31. Mai 1971, Seite , Spalte 1, Zusammenfassungsnr. 113741p, Columbus, Ohio, US; N.I. GEL'PERIN et al.: "Rectifying capacity of columns with fluidized packing"

(73) Patentinhaber: **A4GM Gépipari Kutato-Fejlesztö Leányvállalat, Budafoki ut 70, H-1117 Budapest(HU)**

(72) Erfinder: **György, József, Dipl. Ing. Dr., Tüske köz 4, H-1026 Budapest(HU)**
Erfinder: **Molnár, Károly, Dipl. Ing. Dr., Vöröstorony u. 33/b, H-1025 Budapest(HU)**
Erfinder: **Nyitrai, Ferenc Dipl. Ing. Dr., Nándorfejérvári u 7/b, H-1119 Budapest(HU)**
Erfinder: **Szabo, Lajos Dipl. Ing., Kiss J. u. 30, H-1183 Budapest(HU)**
Erfinder: **Szentgyörgyi, Sándor Dipl. Ing. Dr., Labanc u. 7/a, H-1021 Budapest(HU)**

(74) Vertreter: **Patentanwälte Viering & Jentschura, Steinsdorfstrasse 6, D-8000 München 22(DE)**

ACTORUM AG

**Beschreibung**

Die Erfindung betrifft ein Verfahren zum Trennen von Feststoffteilchen enthaltenden Flüssigkeiten durch Destillation.

Zum Trennen von nicht Feststoffteilchen enthaltenden Flüssigkeiten wird in der DE-B 2 020 144 ein Verfahren zur Destillation eines binären Stoffsystems aus Benzol und Toluol mit Hilfe einer Destillationskolonne beschrieben, wobei der Dampf durch übereinander angeordnete Siebböden strömt, die mit Überlaufwehren und seitlichen Ablaufschächten versehen sind, wobei auf die Siebböden Körper unregelmäßiger Form in wahlloser Verteilung aufgeschüttet sind. Diese Körper sind so beschaffen, daß sie bei geringer Dampfgeschwindigkeit eine auf dem Siebboden aufliegende Schicht und bei hoher Dampfgeschwindigkeit eine Wirbelschicht über dem Siebboden bilden und so Gas und Flüssigkeit gut durchmischen können.

Auf zahlreichen Gebieten der Landwirtschaft und der Industrie wird die Destillation bzw. Rektifikation zum Trennen von Feststoffteilchen enthaltenden Flüssigkeiten verwendet. Trennung durch Destillation erfolgt bei den bekannten Ausführungsformen in verschiedenen, mit Glockenböden, Siebböden, mit verschiedenen Ventilen und mit einer Füllung versehenen Kolonnen und in Kolonnen mit dynamisch ausgestalteten Böden. Es bestand die Absicht, die zur Trennung durch Destillation verwendeten Vorrichtungen so zu modifizieren, daß die Trennleistung erhöht, gleichzeitig die Betriebskosten der Vorrichtung verringert werden können. Mit dieser Zielsetzung wurden mit verschiedene Schwingungen ausführenden Elementen versehene Bodenkonstruktionen entwickelt.

Durch die verschiedenen Ausführungsformen ist es gelungen, Teilresultate zu erzielen; die eine Ausführungsform förderte die Wirksamkeit der Trennung, die andere führte zu erhöhten Leistungen, wiederum konnten gewisse Ausführungsformen die Produktionskosten und den Zeitaufwand bei der Montage verringern. Hingegen ist bisher noch kein Verfahren zum Trennen von Feststoffteilchen enthaltenden Flüssigkeiten durch Destillation bekannt, mit dem in einer vorbestimmten Größenordnung die Forderungen hinsichtlich der Leistung, der Wirksamkeit und der Wirtschaftlichkeit des Trennens befriedigt werden konnten.

Durch die Erfindung wird die Aufgabe gelöst, ein gattungsgemäßes Verfahren zu schaffen, mit dem die Qualität der Destillation von Feststoffteilchen enthaltenden Flüssigkeiten im Sinne der vorstehenden Forderungen verbessert wird.

Gemäß dem erfindungsgemäßen Verfahren zum Trennen von Feststoffteilchen enthaltenden Flüssigkeiten durch Destillation, bei der die Flüssigkeit in einer Kolonne im Gegenstrom zu einer aufsteigenden, aus der Flüssigkeit erzeugten Dampfphase geführt wird und ein Kopf- und ein Sumpfprodukt entnommen werden, wird die zu trennende Flüssigkeit auf ein ein- oder mehrschichtiges Füllkörperbett (8) verteilt aufgegeben, wobei das Füllkörperbett (8) aus von der aufsteigenden Dampfphase im fluidisierten Zustand gehaltenen elementaren Körpern (12) besteht, deren Raumdichte jene der Dampf- und Flüssigkeitsphasen übersteigt.

Vorteilhaft wird ein Teil des Kondensats des Kopfprodukts als Rücklauf in das im fluidisierten Zustand gehaltene Füllkörperbett zurückgeführt. Zur Begünstigung des fluidisierten Zustands kann die Zufuhr eines inerten Gases neben der Dampfphase vorteilhaft sein.

Das erfindungsgemäße Verfahren kann mit einer Vorrichtung, mit einem Aufkocher, einem Kondensator und einer die eigentliche Trennung realisierenden Kolonne durchgeführt werden, in welcher die voneinander getrennt gehaltenen Füllkörperbetten vorgesehen sind, wobei der Aufkocher an dem unter den Füllkörperbetten liegenden Raum der Kolonne angeschlossen ist, während die die Flüssigkeitsphase einführenden Zuleiter an dem über den Füllkörper liegenden Raum der Kolonne über Flüssigkeitsverteiler angeschlossen sind.

Die Füllkörperbetten können aus elementaren Körpern bestehen, die gleiche oder unterschiedliche Abmessungen und/oder Masse, Dichte, Oberfläche und/oder Form aufweisen, solange ihre Raumdichte jene der Dampf- und Flüssigkeitsphase übersteigt.

Die Geschwindigkeit des Dampfes, des Inertgases und der Flüssigkeit kann innerhalb weiter Grenzen gewählt werden, wodurch der Durchmesser der Kolonne weitgehend vermindert werden kann. Das sich in fluidisiertem Zustand befindende Füllkörperbett ermöglicht eine turbulente Diffusion, die feine Dispersion der Flüssigkeitsphase und deren intensive Durchmischung, die Erneuerung der einander berührenden Phasenflächen und so einen besseren Stoffaustausch; auf diese Weise besteht die Möglichkeit, die Größe bzw. die Höhe der Kolonne bedeutend herabzusetzen. Die über das fluidisierte Füllkörperbett verfügende Kolonne ermöglicht eine wesentlich flexiblere Betriebsweise als jedwelche der in unserer Einleitung spezifizierten Vorrichtungen.

Die elementaren Teile der fluidisierten Füllkörper mahlen, zerreißen, kneten, d.h. bearbeiten mechanisch die in der zu destillierenden Flüssigkeit vorhandenen festen und/oder plastischen Teilchen, wodurch die Extraktion der sich darin befindenden Flüssigkeiten und lösbarer oder verdampfbarer Verbindungen beschleunigt wird. Dies ist z.B. der Fall bei der Spiritusherstellung aus Maische, bei der Extraktion von Alkohol, Wasser und Aromas.

Ein Vorteil der Erfindung besteht darin, daß im Verlaufe der Destillation die zum Ausscheiden oder Absetzen tendierenden Materialien nicht durch Reinigung entfernt zu werden brauchen; so wird der sich aus der Reinigung ergebende Stillstand vermieden, da die fluidisierten elementaren Körper selbstreinigend sind.

Die Erfindung wird anhand eines bei der Spiritusherstellung verwendeten Ausführungsbeispiels mit Hilfe der beiliegenden Zeichnung näher erläutert; es zeigen:

Fig. 1 das Schema der Vorrichtung für das erfindungsgemäße Verfahren

Fig. 2 die die eigentliche Trennung durchführende Kolonne, teilweise im Schnitt und in größerem Maßstab dargestellt.

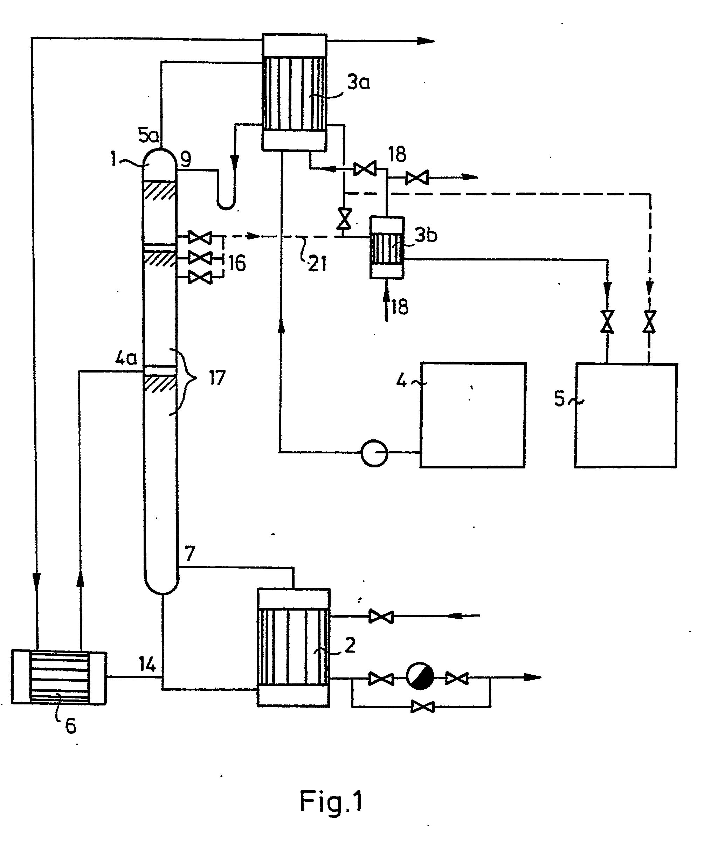

Die in Fig. 1 dargestellte Vorrichtung besteht aus einer Kolonne 1, dem mit einer Leitung 7 an dem Unterteil der Kolonne angeschlossenen Aufkocher 2, Kondensatoren 3a und 3b, sowie aus einem in eine Leitung 4a – die zwischen dem Kondensator 3a und aufgefüllten Räumen 17 der Kolonne 1 eingefügt sind – eingeschaltetem Vorwärmer 6. Der Unterteil des Kondensators 3a kommuniziert mit einer Speiseeinheit 4, während der Kondensator 3b mit einem Produktsammler 5 verbunden ist. Von dem Boden des Kondensators 3a führt eine Rücklaufleitung 9 zu dem oberen Ende der Kolonne. Eine Kopfproduktleitung 5a führt von dem Oberteil der Kolonne in den Oberteil des Kondensators 3a, während eine Sumpfproduktleitung 14 mit dem Aufkocher 2 kommuniziert. Weiterhin ist der Kondensator 3b mit an den Oberteil der aufgefüllten Räume der Kolonne angeschlossenen Abzapfungen 16 über eine mit gestrichelter Linie bezeichnete Leitung 21 verbunden. Die Kondensatoren 3a, 3b sind auch mit einer Kühlwasser zuführenden Leitung 18 verbunden.

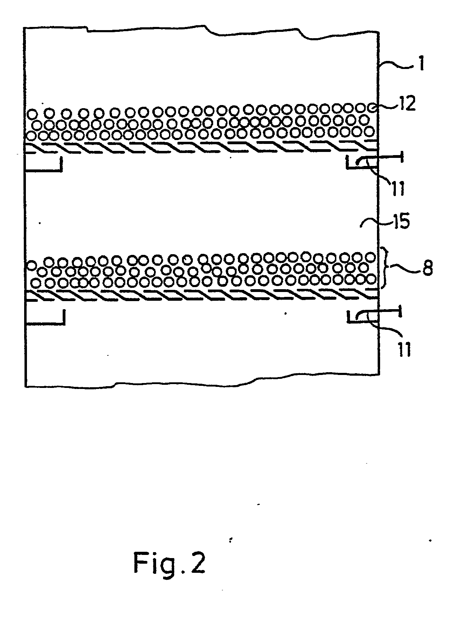

Zur Durchführung der Erfindung sind die aufgefüllten Räume 17 der Kolonne 1 in der in Figur 2 dargestellten Weise mit horizontalen Haltern 11 in Abteilungen 15 unterteilt, in denen die aus elementaren Körpern 12 bestehenden Füllkörperbetten 8 angeordnet sind. Die die Füllkörperbetten 8 bildenden elementaren Körper 12 sind aus einem Grundstoff hergestellt, dessen individuelle Raumdichte jene der Dampf- und Flüssigkeitsphase des zu destillierenden Materials übertrifft. Je nach der Destillationsaufgabe weisen die elementaren Körper 12 der verschiedenen Füllkörperbetten gleiche oder unterschiedliche Abmessungen und/oder Masse, Dichte, Oberfläche und/oder Form auf. Die Halter 11 sind z.B. aus perforiertem Blech mit hoher Durchlaßfähigkeit hergestellt.

Die Arbeitsweise der Vorrichtung ist wie folgt: Die Arbeitsweise wird anhand der Alkoholproduktion erläutert. Zum Anfahren der Vorrichtung wird Wasser in den Aufkocher 2 geleitet, dessen Dampf als kontinuierliche Dampfphase über die Leitung 7 in die Kolonne strömt und die elementaren Körper 12 der Füllkörperbetten 8 in einen fluidisierten Zustand versetzt. Die sorgfältig vorbereitete und gut ausgegorene Maische aus Obst, Getreide oder Zuckersirup wird über die Speiseeinheit 4 in den Kondensator 3a geleitet und von dort in den Vorwärmer 6; zuletzt wird die Maische über den Flüssigkeitsphasenzuleiter 4a in die Kolonne 1 eingepreßt. Aufgrund der Wirkung der durch die Kolonne von unten nach oben strömenden kontinuierlichen Dampfphase strömt der verhältnismäßig flüchtigere Teil der Flüssigkeitsphase, der Maische, in der Kolonne aufwärts und fließt in Form des Kopfprodukts über die Kopfproduktleitung 5a in den Kondensator 3a, wo sie teilweise oder im Ganzen kondensiert wird. Nach Bedarf wird ein Teil des Kondensats als Rücklauf über die Rücklaufleitung 9 in die Kolonne zurückgeführt, und zwar bei der Kolonne nach unserem Beispiel über den oberen aufgefüllten Raum 17, während der andere Teil in den Kondensator 3b einströmt, dort weiter kondensiert wird und nach erfolgter Abkühlung in den Produktsammler 5 gelangt. Wenn es beabsichtigt ist, Alkohohl für ein besonders aromatisches Getränk herzustellen, kann die in der Figur 1 mit gestrichelter Linie dargestellte Lösung vorteilhaft sein; wonach nämlich aus dem Kondensator 3a nur das als zweckmäßig ausgewählte Destillat über den hier nicht dargestellten Kühler entnommen wird, während das Hauptprodukt über die Abzapfungen 16 aus der Kolonne 1 in den Kondensator 3b und von dort in den Produktsammler 5 geleitet wird. Der Kondensator 3b wird mit dem über die Leitung 18 zugeführten Wasser gekühlt. Sollte zur Kühlung des Kondensators 3a die Menge der von der Speiseeinheit 4 kommenden Maische nicht genügend sein, wird auch hier über die Leitung 18 dem Kondensator Kühlwasser zugeführt.

Die in die Kolonne über die Leitung 4a und die Rücklaufleitung 9 eingelassene Flüssigkeit bildet eine abwärts strömende disperse Flüssigkeitsphase; die in fluidisiertem Zustand gehaltenen elementaren Körper 12 halten die Flüssigkeit in einem feindispersen Zustand; das Gemisch wird gerührt, die Oberfläche geknetet; von den in der Maische vorhandenen Feststoffteilchen werden die plastischen Teile abgerieben, abgeknetet oder abgerissen, wodurch die Extraktion des enthaltenden Alkohols, der wertvollen Geschmacks- und Aromakomponenten, beschleunigt und verbessert wird. Durch die ständige Bewegung der elementaren Körper 12 werden die zum Ausscheiden oder Absetzen tendierenden Materialien aufgelockert und von der Oberfläche getrennt oder ihre kontinuierliche Abwärtsströmung und Entleerung ermöglicht; so benötigt die Erfindung weder eine häufige Reinigung noch einen Stillstand der Vorrichtung.

Das von dem Alkohol und den wertvollen Geschmacks- und Aromastoffen getrennte Sumpfprodukt gelangt über die Leitung 14 zu dem Boden des Aufkochers 2; es wird dort wiederholt aufgekocht und in die Kolonne zurückgeleitet; in der Kolonne hält die kontinuierliche Dampfphase die elementaren Körper 12 in dem fluidisierten Zustand und übernimmt dabei die Rolle des zum Anfahren erforderlichen Wasserdampfs.

Mit den traditionellen Lösungen verglichen strömt die kontinuierliche Dampfphase bei einem niedrigeren Widerstand und wirksameren Phasenkontakt aufwärts; sie wird in den freien Räumen 15 über den Füllkörperbetten 8, im vollen Querschnitt der Kolonne, intensiv durchmischt und homogenisiert.

Durch die Anwendung des erfindungsgemäßen Verfahrens können Getränke besserer Qualität und wirtschaftlicher hergestellt werden.

Die Erfindung ist keinesfalls auf das hier geschilderte Beispiel beschränkt; unter Anwendung der Erfindung können auch Lösungsmittel wirtschaftlich getrennt werden, so z.B. in der Mineralölindustrie.

**Patentansprüche**

1. Verfahren zum Trennen von Feststoffteilchen enthaltenden Flüssigkeiten durch Destillation, bei der die Flüssigkeit in einer Kolonne im Gegenstrom zu einer aufsteigenden, aus der Flüssigkeit erzeugten Dampfphase geführt wird und ein Kopf- und ein Sumpfprodukt entnommen werden, dadurch gekennzeichnet, daß die zu trennende Flüssigkeit auf ein ein- oder mehrschichtiges Füllkörperbett (8) verteilt aufgegeben wird, wobei das Füllkörperbett (8) aus von der aufsteigenden Dampfphase im fluidisierten Zustand gehaltenen elementaren Körpern (12) besteht, deren Raumdichte jene der Dampf- und Flüssigkeitsphasen übersteigt.

2. Verfahren nach Anspruch 1, dadurch gekennzeichnet, daß ein Teil des Kondensats des Kopfprodukts als Rücklauf in das in fluidisiertem Zustand gehaltenen Füllkörperbett (8) zurückgeleitet wird.

3. Verfahren nach Anspruch 1 oder 2, dadurch gekennzeichnet, daß die zu trennende Flüssigkeit über den Kondensator (3a) und einen Vorwärmer (6) auf das fluidisierte Füllkörperbett (8) geleitet wird.

4. Verfahren nach einem der Ansprüche 1 bis 3, dadurch gekennzeichnet, daß zur Förderung des fluidisierten Zustands neben der kontinuierlichen Dampfphase auch Inertgas zugeführt wird.

## Claims

1. Method for separating liquids, containing solid matter particles, by distillation, in which the liquid is led in a column in counterflow to a rising steam phase produced from the liquid and a top- and bottom product are subtracted, characterised in that the liquid to be separated is fed distributedly on a bed (8) of filling material of one or several layers, wherein the bed (8) of filling material consists of elementary bodies (12) kept by the rising steam phase in fluidised state, the volumetric density of which exceeding that of the steam and liquid phases.

2. Method as claimed in claim 1, in which a part of the condensate of the top product is led back as reflux into the bed (8) of filling material kept in fluidised state.

3. Method as claimed in claim 1 or 2, in which the liquid to be separated is led on the fluidised bed (8) of filling material through the condenser (3a) and a preheater (6).

4. Method as claimed in one of the claims 1 to 3, in which for enhancing the fluidised state besides the continuous steam phase also inert gas is supplied.

## Revendications

1. Procédé pour séparer par distillation des liquides contenant des particules solides, dans lequel on envoie du liquide dans une colonne à contre-courant d'une phase de vapeur ascendante produite à partir du liquide, et on recueille un produit de tête et un produit de cuve, caractérisé en ce que le liquide à fractionner est réparti sur un lit de matériau de remplissage ou de garnissage formant une ou plusieurs couches, lequel lit (8) de matériau de remplissage (8) est formé de corps (12) élémentaires, maintenus à l'état fluidisé à l'aide de la phase vapeur ascendante, dont la densité volumique est supérieure à celle des phases vapeur et liquide.

2. Procédé selon la revendication 1, caractérisé en ce qu'une partie du condensat du produit de tête est retournée en tant que reflux dans le lit (8) de matériau de remplissage maintenu à l'état fluidisé.

3. Procédé selon la revendication 1 ou 2, caractérisé en ce que le liquide traité est envoyé sur un lit (8) de matériau de remplissage maintenu à l'état fluidisé après passage dans un condenseur (3a) et un préchauffeur (6).

4. Procédé selon l'une des revendications 1 à 3, caractérisé en ce que, dans le but de maintenir l'état fluidisé, on complémente la phase vapeur formée en continu d'un courant de gaz inerte.

Fig.1

Fig.2